# EUROPÄISCHE PATENTSCHRIFT

(11) **EP 2 135 526 B1**
(45) Veröffentlichungstag und Bekanntmachung des Hinweises auf die Patenterteilung: **02.01.2013**
(21) Anmeldenummer: 09007715.7
(22) Anmeldetag: 10.06.2009
(51) Int. Cl.: A46B 3/04, A46B 7/00, A46D 3/00, B29C 45/14, A46B 3/02, A46B 3/06, B29L 31/42

(54) **Bürste, insbesondere Zahnbürste und Verfahren zu deren Herstellung**
Brush, in particular tooth brush and method for its production
Brosse, en particulier brosse à dents et son procédé de fabrication

(30) Priorität: 20.06.2008 DE 102008029499
(43) Veröffentlichungstag der Anmeldung: 23.12.2009
(73) Patentinhaber: M+C Schiffer GmbH, 53577 Neustadt-Wied (DE)
(72) Erfinder: Jüntgen, Tim, Dr.-Ing., 53578 Windhagen (DE); Buchholz, Erwin, 53567 Asbach (DE); Weißenfels, Jürgen, 57632 Kescheid/Püscheid (DE)
(74) Vertreter: Grünecker, Kinkeldey, Stockmair & Schwanhäusser

(56) Entgegenhaltungen:
- DE-A1- 3 823 203
- JP-A- 2002 051 843
- JP-A- 2003 135 147
- JP-A- 2003 144 224

## Beschreibung

Die vorliegende Erfindung betrifft eine Bürste, insbesondere eine Zahnbürste, umfassend einen Borstenbündel tragenden Borstenkopf und einen Griffstiel mit einem spritzgegossenen Grundkörper, der einen bis zu dem Bürstenkopf reichenden Befestigungsabschnitt aufweist, über den die Borstenbündel mit dem Grundkörper verbunden sind.

Eine derartige Zahnbürste ist aus der EP 1 142 505 bekannt. Bei diesem Stand der Technik wird zunächst ein Borstenträger in Form eines Bürstenkopfplättchens mit Borstenbündeln versehen. Die Borstenbündel werden zunächst an dem plättchenartigen Borstenträger befestigt und danach wird die so gebildete Einheit in die Bürstenkopfschale eingebracht und befestigt. Die Befestigung kann nach der Offenbarung der EP 1 142 505 durch Verschweißen erfolgen. Auch offenbart die Druckschrift das Verkleben des Plättchens mit der Bürstenkopfschale. Hierzu ist es nach der EP 1 142 505 erforderlich, die Kontur des Plättchens exakt auf die Kontur der Bürstenkopfschale anzupassen. Darüber hinaus wird der Innenumfang der Bürstenkopfschale und der Umfangsrand des Plättchens konisch ausgebildet, um eine möglichst gute und sichere Anlage zwischen dem Bürstenkopf und dem Plättchen zu erreichen. Diese Verfahrensführung ist relativ aufwändig und kann nicht sicherstellen, dass sich keine Verunreinigung zwischen dem Plättchen und dem Rand der Bürstenkopfschale einnisten. Bei einer alternativen, ebenfalls aus EP 1 142 505 bekannten Variante wird Kleber auf die Oberseite des Bürstenkopfes den Rand des Plättchens überdeckend aufgebracht. Dies mag zwar zu einer vollständigen Versiegelung des Spaltes zwischen dem Plättchen und dem Bürstenkopf führen. Allerdings ergibt sich hierdurch eine störende Konturierung an der Oberfläche der Bürste, die ebenfalls das Einnisten von Verschmutzung und Bakterien fördert und darüber hinaus bei bestimmten Bürsten die Putzwirkung verschlechtert. Insbesondere bei Zahnbürsten ist darauf zu achten, dass die von den Borstenbündeln durchragte Oberfläche möglichst glatt ausgeformt ist.

Die Lehre nach der EP 1 142 505 folgt aber einer im Grunde zu begrüßenden Überlegung, zunächst den Grundkörper im Wege des Spritzgießens herzustellen, was die Möglichkeit offen lässt, auch aufwändigere Konturen exakt und kostengünstig abzubilden, gegebenenfalls im Mehrkomponentenspritzguss Funktionsflächen oder Werbeschriften bzw. ornamentale Zusätze an dem Grundkörper anzubringen. Die Herstellung des Grundkörpers unter Anwendung relativ hoher Formlnnendrücke wird abgeschlossen, bevor die Borstenbündel mit dem Grundkörper verbunden werden. Erst nach Entformung des Grundkörpers aus der Spritzgussform werden die Borstenbündel an dem Grundkörper befestigt. Gleichwohl wird nicht in herkömmlicher Weise das Borstenbündel in eine hierfür vorgesehene Ausnehmung am Bürstenkopf eingebracht und mit einem metallischen Anker versehen (konventionelle Ankertechnik), sondern es wird ein relativ flacher Borstenträger zunächst mit Borstenbündeln bestückt und dann mit dem Grundkörper befestigt. Dabei lässt sich der Borstenträger auf einfache Weise mit unterschiedlich großen Borstenbündeln versehen, was bei der herkömmlichen Ankertechnologie auf Schwierigkeiten stößt.

Wie vorstehend bereits beschrieben, stellt die aus der EP 1 142 505 bekannte Lösung allerdings unter hygienischen und gebrauchstechnischen Gesichtspunkten keine optimale Lösung dar.

Eine weitere Bürste gemäß den oberbegrifflichen Merkmalen von Anspruch 1 ist aus der DE 38 23 203 A1 bekannt. Nach der Lehre dieser Druckschrift wird ein einen Bürstenkopf ausbildender Grundkörper aus Kunststoff hergestellt. Dieser Grundkörper weist eine Bohrung auf, in welcher ein Borstenfeld eingebracht wird. Die das Borstenfeld bildenden Filamente werden mit einer Vergussmasse mit dem Grundkörper verbunden. Hierzu wird Vergussmasse von einer der von den Borstenfilamenten durchragten Oberfläche abgewandten Rückseite in die Bohrung eingebracht.

Das vorbekannte Verfahren bedingt eine Handhabung der einzelnen Filamente derart, dass diese sicher in die Bohrung eingebracht werden. Selbst mit dem vorbekannten Verfahren ist es nahezu unmöglich, die Filamente mit einer Konturierung an dem Borstenträger zu befestigen. Als Konturierung soll das Anordnen der nutzungsseitigen Enden einzelner Filamente in unterschiedlichen Ebenen verstanden werden.

Der vorliegenden Erfindung liegt das Problem zugrunde, eine den hygienischen Anforderungen und gebrauchstechnischen Gesichtspunkten genügende Bürste auf einfache Weise herzustellen. Darüber hinaus will die vorliegende Erfindung ein zur Herstellung einer solchen Bürste geeignetes Verfahren angeben.

Mit Rücksicht auf das produktbezogene Problem wird mit der vorliegenden Erfindung eine Bürste mit den Merkmalen von Anspruch 1 vorgeschlagen. Die Vergussmasse bietet gegenüber dem aus der EP 1 142 505 vorbekannten Kleber den Vorteil einer geringen Viskosität, so dass mit der Vergussmasse etwaige Freiräume zwischen dem Grundkörper und den Bostenbündeln oder einem diese Borstenbündel tragenden Grundkörper ausgefüllt werden. Dies gilt sowohl für etwaige Freiräume innerhalb des Bürstenkopfes als auch für die Ausfüllung von Fehlstellen und kleinen Freiräumen bzw. Schlitzen an den Phasengrenzen verschiedener Elemente des Bürstenkopfes durch die Vergussmasse. Des Weiteren wird die Vergussmasse vorzugsweise mit einem Volumen eingesetzt, welches sämtliche Freiräume innerhalb des Bürstenkopfes ausfüllt, wodurch hygienischen Anforderungen in verbesserter Weise entsprochen wird. Die Vergussmasse wird dabei mit einer anderen Technik als das dem Spritzgießen auf, an oder um den Befestigungsabschnitt gebracht. Die Vergussmasse lässt sich aufgrund ihrer niedrigen Viskosität und ihrer stofflichen Beschaffenheit bei Atmosphärendruck oder relativ geringem Überdruck verarbeiten, so dass im Gegensatz zur Verbindung der Borstenbündel im Wege des Spritzgießens ein geringerer vorrichtungsmäßiger Aufwand zu treiben ist und des Weiteren nicht die Gefahr besteht, dass die Vergussmasse entlang der Filamente von Borstenbündeln über die zu bildende Außenfläche des Bürstenkopfes hinaus wandert und die Filamente der Borstenbündel verklebt.

Bei einer Weiterbildung kann die Vergussmasse auch mit dem Befestigungsabschnitt des Grundkörpers und einem beispielsweise mit dessen und/oder mit der Kontur des Bürstenkopfes ausgeformten Träger verbunden sein. Bei dieser Ausgestaltung ergibt sich eine Sandwichstruktur bestehend aus Befestigungsabschnitt, Vergussmasse und Borstenträger, wobei die befestigungsseitigen Enden der Borstenbündel innerhalb der Vergussmasse befindlich sind und von dieser vorzugsweise eingesiegelt werden.

Im Gegensatz zu dem Kleber gemäß EP 1 142 505, der lediglich im Bereich der Berührungsflächen zwischen Borstenträger und Grundkörper aufgebracht wird, wird bei dem erfindungsgemäßen Erzeugnis die Bürstenkopfschale mit einer Vergussmasse ausgefüllt. Diese verfestigt im wesentlichen bis zum Rand der Bürstenkopfschale, vorzugsweise exakt höhengleich mit diesem Rand. Soweit darauf abgestellt wird, dass die Vergussmasse "im wesentlichen" bis zum Rand der Bürstenkopfschale eingefüllt wird, soll dies so verstanden werden, dass möglicherweise eine geringfügige Rinne oder eine leichte Erhebung im Bereich des Randes der Bürstenkopfschale vorgesehen ist. Diese leichte Kontur ist aber so gering, dass sich kein spürbarer Unterschied in Bezug auf die Putzeigenschaften und die hygienischen Anforderungen im Vergleich zu einer Bürste mit vollkommen ebener durchgehender, beispielsweise stofflich identischer Oberfläche im Bereich des Bürstenkopfes zeigt.

Dabei kann zunächst ein Volumen der Vergussmasse in die Bürstenkopfschale eingebracht werden, welches geringer als das Volumen der Bürstenkopfschale ist. Das Auffüllen der Vergussmasse im Wesentlichen bis auf Höhe des Randes kann danach dadurch erfolgen, dass die Borstenbündel unter Verdrängung von Vergussmasse mit ihrem befestigungsseitigen Ende in die Vergussmasse eingebracht werden. Gegebenenfalls können diese Borstenbündel hierbei auch an einem Borstenträger befestigt sein, dessen Einbringen in die Borstenkopfschale Vergussmasse verdrängt, so dass diese in etwa auf Höhe des Randes der Bürstenkopfschale verfestigt.

Die Vergussmasse füllt vorzugsweise die gesamte Bürstenkopfschale aus, wodurch die hygienischen Eigenschaften wie auch die Befestigung der Borstenbündel an dem Grundkörper verbessert wird.

Als Vergussmasse kann ein Schmelzklebstoff zum Einsatz kommen. Geeignete Schmelzklebstoffe haben bei Verarbeitungstemperatur, d.h. bei einer Temperatur unterhalb des Schmelzpunktes des den Grundkörper bildenden Thermoplasten eine sehr geringe Viskosität.

Alternativ kann die Vergussmasse durch ein Oligomersystem gebildet sein. Gedacht ist hier beispielsweise an ein cyclisches Butylenterephthalat. Entsprechende CBT können in Pulver- oder Granulatform vorgesehen sein. Sie polymerisieren bei Erwärmung zu thermoplastischem PBT (Polybutylenterephthalat). Auch die Viskosität solcher Oligomersysteme ist relativ gering. Sie beträgt bei den hier anzuwendenden Verarbeitungstemperaturen etwa zumindest das Zehnfache der Viskosität des den Grundkörper bildenden Thermoplast.

Ähnliche Vorteile bilden Vergussmassen im PUR-System. Hierbei können Ein- oder Zweikomponentensysteme als Vergussmasse eingesetzt werden. Eine Vergussmasse aus Polyurethan kann hinsichtlich Verarbeitungszeit, Farbe und Härte in weiten Grenzen und nahezu beliebig eingestellt werden. Die Viskosität bei Verarbeitung ist etwa 10- bis 100-fach geringer als diejenige des den Grundkörper bildenden Thermoplast, der beispielsweise Polypropylen sein kann. Die zuvor vorgestellten Alternativen für die stoffliche Beschaffenheit der Vergussmasse weisen die Gemeinsamkeit einer stark verminderten Viskosität unter Verarbeitungsbedingungen auf. Dementsprechend können die Vergussmassen beim Einfüllen in eine Form zur Verbindung des Borstenbündels mit dem Grundkörper sämtliche Freiräume ausfüllen und auch kleinere Spalte nach außen abdichten, die beispielsweise zwischen dem Außenumfang des Borstenträgers und dem Innenumfang der Bürstenkopfschale und/oder innerhalb eines gitternetzartigen Borstenträgers freiliegen und ohne das Eindringen der Vergussmasse Hohlräume bereitstellen würden, in denen sich Verschmutzung oder Keime einnisten können. Als geringe Viskosität im Sinne der vorliegenden Erfindung werden insbesondere Viskositäten von zwischen 0,5 mPa s und 10⁶ mPa s vorzugsweise zwischen 10² mPa s und 10⁴ mPa s bei Verarbeitungstemperatur verstanden. Die Verarbeitungstemperatur kann bei Raumtemperatur liegen. Bei erhöhten Temperaturen liegt die Verarbeitungstemperatur unterhalb des Schmelzpunktes des den Grundkörper bilden den Thermoplasten. Maßgeblich bei Grundkörpern, die aus mehreren Komponenten spritzgegossen sind, ist der die Wandung der Bürstenkopfschale ausformende Thermoplast. Zur Lösung des verfahrensmäßigen Aspekts der vorliegenden Erfindung wird mit dieser ein Verfahren zur Herstellung einer Bürste, insbesondere einer Zahnbürste gemäß Anspruch 4 vorgeschlagen, welche sich durch die Merkmale, wie sie im kennzeichnenden Teil des Anspruchs 4 angegeben sind vom gattungsbildenden Stand der Technik aus der DE 38 23 203 A1 unterscheidet.

Bei dieser Verfahrensführung füllt die Vergussmasse nach Verfestigung vorzugsweise sämtliche Hohlräume im Bereich des Bürstenkopfes aus. Bei dem erfindungsgemäßen Verfahren wird die Vergussmasse in eine nach oben offene und den Befestigungsabschnitt aufnehmende Form eingegossen, wo sie erstarrt. Die Vergussmasse hat beim Verarbeiten eine relativ geringe Viskosität, insbesondere innerhalb der zuvor genannten Parametergrenzen. Die Vergussmasse wird bei Atmosphärendruck oder bei allerhöchstens geringem Innendruck in die Form eingebracht bzw. in dieser verfestigt. So kann die Vergussmasse zunächst unter atmosphärischen Bedingungen in die Form gebracht werden.

Als Form im vorerwähnten Sinne kann eine Form verstanden werden, die nach Art einer Bürstenkopfschale ausgeformt ist, welche in die Vergussmasse eingefüllt wird. Beim Einbringen der befestigungsseitigen Enden der Borstenbündel in eine solche Bürstenkopfschale steigt die Vergussmasse auf und zwar vorzugsweise bis zum Rand der Bürstenkopfschale. Hierdurch wird eine Bürste geschaffen, bei der die von den Borstenbündeln durchragten Oberfläche vollständig eben und glatt ist. Durch Abgleich zwischen dem Volumen der Bürstenkopfschale und dem Verdrängungsvolumen der eingebrachten Borstenbündel gegebenenfalls des die Borstenbündel tragenden Borstenträgers kann dabei das einzufüllende Volumen der Vergussmasse so bestimmt werden, dass diese höhengleich mit dem Rand der Bürstenkopfschale auch in den Bereichen zwischen den Borstenbündeln erstarrt. Dieses Erstarren auch zwischen den Borsten bündeln wird auch im Falle eines Borstenträgers gegeben sein, sofern dieser eine einzelne, Borstenbündel miteinander verbindende Gitterstruktur hat. Dieses offene Gitter wird von der Vergussmasse durchströmt und in der Vergussmasse zur Befestigung der Borstenbündel eingesiegelt.

Sofern der Borstenträger als Plättchen mit den Borstenbündeln durchragter geschlossener Oberfläche ausgeformt ist, gelangt die Vergussmasse ausschließlich in einen Spalt zwischen dem Borstenträger und dem Grundkörper und wird durch Verdrängung in etwa bis auf Höhe des Randes der Bürstenkopfschale verbracht, wobei die Vergussmasse vorzugsweise nach kurzer Zeit verfestigt.

Die nach dem Verfahren hergestellte Bürste lässt sich dementsprechend wirtschaftlich herstellen, entspricht den beispielsweise bei Zahnbürsten zu stellenden hygienischen Anforderungen und hat eine als eben und störungsfrei zu bezeichnende und von den Borstenbündeln durchragte Bürstenkopfoberfläche.

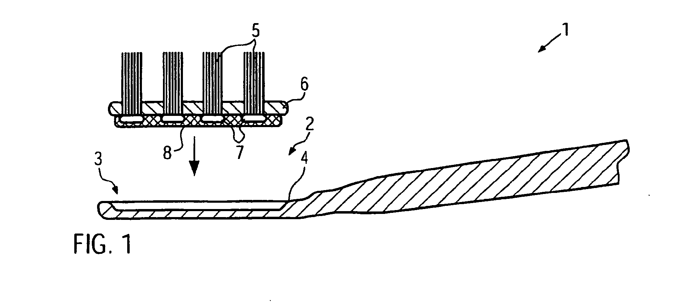

Weitere erfindungsgemäße bevorzugte Weiterbildungen ergeben sich aus den abhängigen Ansprüchen. Vorteile und Einzelheiten der Erfindung ergeben sich aus der nachfolgenden Beschreibung von Ausführungsbeispielen in Verbindung mit der Zeichnung. In dieser Zeichnung zeigt
- Figur 1: eine Längsschnittansicht eines als Zahnbürste ausgebildeten ersten Ausführungsbeispiels der vorliegenden Erfindung.

Die Figur 1 zeigt einen Grundkörper 1, der im Bereich des Bürstenkopfes 2 eine zur Oberseite der Bürste offene Bürstenkopfschale 3 ausbildet, die von einem umlaufenden Rand 4 begrenzt ist.

Die Figur 1 zeigt den Grundkörper schematisch zu einem Zeitpunkt, bei dem ein ein Borstenbündel 5 tragendes Bürstenkopfplättchen 6, welches einen Borstenträger ausbildet, noch nicht mit dem Grundkörper 1 verbunden ist. Das Bürstenkopfplättchen 6 weist Kanäle auf, durch welche die einzelnen Borstenbündel 5 hindurchgesteckt sind. An den befestigungsseitigen Enden sind die Borstenbündel 5 mit einer Verdickung 7 versehen, die durch Anschmelzen der Borstenbündel 5 erzeugt ist. Die Verdickung 7 liegt gegen die Unterseite des Bürstenkopfplättchens 6 an und verschließt insofern die Kanäle. Auf der teilweise durch die Verdickung 7 und teilweise durch die Unterseite des Bürstenkopfplättchens gebildeten Oberfläche ist eine Vergussmasse 8 aufgetragen. Das so vorbereitete Bürstenkopfplättchen 6 wird zusammen mit den Borstenbündeln 5 in die Bürstenkopfschale 3 eingesetzt. Hierbei fließt die Vergussmasse 8 innerhalb der Bürstenkopfschale 3, füllt sämtliche Hohlräume aus und dringt schließlich in einen Spalt zwischen der Umfangsfläche des Bürstenkopfplättchens 6 und dem Grundkörper 1, bis die Vergussmasse 8 in etwa höhengleich mit dem Rand 4 und der Oberfläche des Bürstenkopfplättchens 6 ist. Dort verfestigt die Vergussmasse 8.

### Bezugszeichenliste

- 1: Grundkörper
- 2: Bürstenkopf
- 3: Bürstenkopfschale
- 4: Rand
- 5: Borstenbündel
- 6: Bürstenkopfplättchen
- 7: Verdickung
- 8: Vergussmasse

## Patentansprüche

1. Bürste, insbesondere Zahnbürste, umfassend einen Borstenbündel (5) tragenden Bürstenkopf (2) und einen Griffstiel mit einem spritzgegossenen Grundkörper (1), der einen bis zu dem Bürstenkopf (2) reichenden Befestigungsabschnitt (3, 9) aufweist, an dem die Borstenbündel (5) über eine Vergussmasse mit dem Grundkörper (1) verbunden sind, **dadurch gekennzeichnet,**
**dass** der Befestigungsabschnitt (3, 9) nach Art einer Bürstenkopfschale (3) ausgebildet ist;
**dass** mehrere Borstenbündel (5) an einem Borstenträger (6) befestigt sind,
dessen von den Borstenbündeln (5) durchragte Oberfläche des Borstenträgers (6) und
die in die Bürstenkopfschale (3) gefüllte und den Borstenträger (6) mit dem Grundkörper (1) verbindende Vergussmasse (8) bündig zu dem Rand (4) der Bürstenkopfschale (3) vorgesehen sind.

2. Bürste nach Anspruch 1, **dadurch gekennzeichnet, dass** die Vergussmasse (8) ausgewählt ist aus der Gruppe bestehend aus einem Schmelzklebestoff, einem Oligomersystem und einem PUR-System.

3. Bürste nach Anspruch 1 oder 2, **dadurch gekennzeichnet, dass** der Borstenträger (6) als plattenförmiges Bauteil ausgebildet ist, dessen Kontur an die Kontur des Randes (4) der Bürstenkopfschale (3) angepasst ist.

4. Verfahren zur Herstellung einer Bürste, insbesondere Zahnbürste, mit einem Borstenbündel (5) tragenden Bürstenkopf (2) und einem Griffstiel, bei dem die Borstenbündel (5) mit einem mittels Spritzgießen aus einem Thermoplasten hergestellten Grundkörper (1) nach Entformen desselben über eine sich verfestigende Vergussmasse (8) verbunden werden,
**dadurch gekennzeichnet,**
**dass** die Borstenbündel (5) an einem von den Borstenbündeln (5) durchragten Borstenträger (6) befestigt werden,
**dass** der Grundkörper (1) mit einer Bürstenkopfschale (3) spritzgegossen wird,
**dass** die Vergussmasse (8) zunächst in die Bürstenkopfschale (3) eingebracht wird, und dass der Borstenträger (6) so weit in die Bürstenkopfschale (3) eingebracht wird, bis die Vergussmasse (8) durch Verdrängung in einem Spalt zwischen dem Borstenträger (6) und dem Grundkörper (1) bis auf Höhe des Randes (4) der Bürstenkopfschale (3) gelangt ist.

## Claims

1. A brush, particularly toothbrush, comprising a brush head (2) carrying bundles of bristles (5), and a handle with an injection molded basic body (1) which comprises a fastening section (3, 9) extending up to the brush head (2), on which the bundles of bristles (5) are bonded to the basic body (1) through a casting compound,
**characterized in**
**that** the fastening section (3, 9) is formed in the manner of a brush head tray (3);
**that** several bundles of bristles (5) are fastened to a bristle carrier (6),
which surface of the bristle carrier (6) which is penetrated by the bundles of bristles (5) and the casting compound (8) which is filled into the brush head tray (3) and which connects the bristle carrier (6) with the basic body (1) are arranged substantially flush with the rim (4) of the brush head tray (3).

2. The brush according to claim 1, **characterized in that** the casting compound (8) is selected from the group consisting of a hot melt adhesive, an oligomer system and a PUR system.

3. The brush according to claim 1 or 2, **characterized in that** the bristle carrier (6) is configured as a plate-shaped component the contour of which is matched to the contour of the rim (4) of the brush head tray (3).

4. A method for manufacturing a brush, particularly a toothbrush, comprising a brush head (2) carrying bundles of bristles (5), and a handle in which the bundles of bristles (5) are bonded trough a casting compound (8) after its solidification to a basic body (1), manufactured by injection molding from a thermoplastic after demolding of said basic body (1),
**characterized in**
**that** the bundles of bristles (5) are fastened on a bristle carrier (6) which is penetrated by the bundles of bristles (5),
**that** the basic body (1) comprising a brush head tray (3) is injection molded,
**that** the casting compound (8) initially is introduced into the brush head tray (3), and
**that** the bristle carrier (6) is introduced into the brush head tray (3) to such extend that the casting compound (8) passes by displacement into a gap between the bristle carrier (6) and the basic body (1) up the height of the rim (8) of the brush head tray (3).

## Revendications

1. Brosse, et en particulier brosse à dents, comprenant une tête de brosse (2) qui porte des faisceaux de poils (5) et un manche avec un corps de base moulé par injection (1) qui comporte une section de fixation (3, 9) allant jusqu'à la tête de brosse (2), les faisceaux de poils (5) étant attachés sur ladite section au corps de base (1) à l'aide d'une masse de scellement,
**caractérisée**
**en ce que** la section de fixation (3, 9) est constituée sous forme d'une coquille de tête de brosse (3) ;
**en ce que** plusieurs faisceaux de poils (5) sont fixés à un support de brosse (6),
dont la surface du support de brosse (6) dépassant des faisceaux de poils (5) et la masse de scellement (8) remplie dans la coquille de tête de brosse (3) et reliant le support de brosse (6) au corps de base (1) sont agencées de manière à affleurer avec le bord (4) de la coquille de tête de brosse (3).

2. Brosse selon la revendication 1, **caractérisée en ce que** la masse de scellement (8) est sélectionnée parmi le groupe constitué par un adhésif thermofusible, un système oligomère et un système polyuréthane.

3. Brosse selon la revendication 1 ou 2, **caractérisée en ce que** le support de brosse (6) est constitué comme un composant en forme de plaque dont le contour est adapté au contour du bord (4) de la coquille de tête de brosse (3).

4. Procédé de fabrication d'une brosse, en particulier d'une brosse à dents, comprenant une tête brosse (2) qui porte des faisceaux de poils (5) et un manche, dans laquelle les faisceaux de poils (5) sont attachés à un corps de base (1) fabriqué par moulage à injection d'un thermoplastique après avoir démoulé ledit corps de base sur une masse de scellement (8) qui se solidifie,
**caractérisé**
**en ce que** les faisceaux de poils (5) sont fixés à un support de brosse (6) dépassant des faisceaux de poils (5),
**en ce que** le corps de base (1) est moulé par injection avec une coquille de tête de brosse (3),
**en ce que** la masse de scellement (8) est ensuite introduite dans la coquille de tête de brosse (3), et
**en ce que** le support de brosse (6) est introduit dans la coquille de tête de brosse (3) jusqu'à ce que la masse de scellement (8) parvienne par extrusion dans une fente entre le support de brosse (6) et le corps de base (1) jusqu'à hauteur du bord (4) de la coquille de tête de brosse (3).
